# EUROPEAN PATENT APPLICATION

(11) **EP 4 502 302 A1**
(43) Date of publication of application: **05.02.2025**
(21) Application number: 22935762.9
(22) Date of filing: 23.12.2022
(51) Int. Cl.: E02F 9/24, B60K 1/04

(54) **WORK MACHINE**

(30) Priority: 28.03.2022 JP 2022051825
(71) Applicant: Hitachi Construction Machinery Tierra Co., Ltd., Shiga 528-0061, (JP)
(72) Inventor: ISHII, Takeshi, Koka-shi, Shiga 528-0061 (JP); TAKAGI, Wataru, Koka-shi, Shiga 528-0061 (JP); KAWAGUCHI, Hiroshi, Koka-shi, Shiga 528-0061 (JP)
(74) Representative: MERH-IP Matias Erny Reichl Hoffmann Patentanwälte PartG mbB
(86) International application number: PCT/JP2022/047629
(87) International publication number: WO 2023/188636

(57) **Abstract**

A counterweight (7) is provided on the rear end side of an upper revolving structure (3) . An electric motor (10) is a power source for a hydraulic excavator (1). An emergency stop switch (21) stops the electric motor (10). The counterweight (7) is provided with a recessed part (7D) recessed from a rear surface (7A) that is a surface of the counterweight (7). The emergency stop switch (21) is provided within the recessed part (7D) of the counterweight (7).

## Description

### TECHNICAL FIELD

The present invention relates to working machines, such as hydraulic excavators, wheel loaders, fork lifts, tractors, combines and the like that are used in various working sites for civil engineering works, forestry industry, demolish works, underground works, carrying works, agricultural works and the like, for example.

### BACKGROUND ART

As a working machine, there is known a compact hydraulic excavator with a small revolving radius, for example. There are some cases where the compact hydraulic excavator is operated in a state where workers are near the compact hydraulic excavator, for example, in city streets, works in small spaces and the like. In addition, in a case of the compact hydraulic excavator, workers relatively often stand behind a vehicle for opening/closing a cover of an upper revolving structure at the maintenance or at the cleaning.

However, a space behind the hydraulic excavator is likely to become a blind spot of an operator (driver) that operates the hydraulic excavator. Although a worker is present behind the hydraulic excavator, the hydraulic excavator starts to revolve or travel in error, which is not desirable. Therefore, when the hydraulic excavator is in the middle of operating, it is considered to dispose an emergency stop switch in the hydraulic excavator in order that a worker other than an operator can make an emergency stop of the hydraulic excavator.

Particularly, in most of the electric working machines, operational portions for executing connection of a power feeding cable, operations of start and stop of charging and the like are arranged on the backside of the vehicle body. In addition, since an electric motor is used as a power source in the electric working machine, it is useful to dispose an emergency stop switch from a viewpoint that it is more difficult to figure out the operation of the vehicle body due to driving noises as compared to the working machine on which an engine (internal combustion engine) having a large driving noise is mounted.

On the other hand, Patent Document 1 discloses the technology that in a large-sized hydraulic excavator, an emergency stop device including a stop switch, a link mechanism and a stop lever is disposed on the lower side of a rear part of an upper revolving structure. According to this technology, it is possible to stop the engine in the hydraulic excavator from the ground by operating the stop lever of the emergency stop device.

### PRIOR ART DOCUMENT

### PATENT DOCUMENT

Patent Document 1: Japanese Utility Model Laid-Open No. 4-99753 A

### SUMMARY OF THE INVENTION

In a case of the technology described in Patent Document 1, the emergency stop device including the stop switch, the link mechanism, the stop lever and the like projects downward from the lower surface of the upper revolving structure. There will be considered a case where this emergency stop device is adopted in the compact hydraulic excavator. In this case, there is a possibility that the stop switch is damaged by scraps involved in a crawl track of the hydraulic excavator, flying objects or the like. In addition, there is a possibility that the stop switch malfunctions due to contact between an exterior part of the hydraulic excavator and obstacles around the hydraulic excavator.

An object of the present invention is to provide a working machine that can suppress malfunctions and damages of an emergency stop switch.

A working machine according to the present invention comprises: an automotive vehicle body; and a working mechanism attached to the front side of the vehicle body, the vehicle body including: a counterweight disposed on a rear end side of the vehicle body; a prime mover serving as a power source, and an emergency stop switch for stopping the prime mover, characterized in that: the counterweight is provided with a recessed part that is recessed from a surface of the counterweight; and the emergency stop switch is disposed within the recessed part of the counterweight.

According to the present invention, the malfunctions and damages of the emergency stop switch can be suppressed.

### BRIEF DESCRIPTION OF THE DRAWINGS

Fig. 1 is a right side view showing a hydraulic excavator according to an embodiment.
Fig. 2 is a rear view showing the hydraulic excavator as viewed from the left side in Fig. 1.
Fig. 3 is an enlarged view showing a counterweight, a recessed part, an emergency stop switch and the like in a position similar to that in Fig. 2.
Fig. 4 is a circuit configuration view showing an electric drive system for driving a hydraulic pump in the hydraulic excavator.
Fig. 5 is a circuit configuration view showing the inside of a switching device in Fig. 4 together with the emergency stop switch and the like.

### MODE FOR CARRYING OUT THE INVENTION

Hereinafter, an embodiment of the present invention will be in detail explained referring to the accompanying drawings by taking a case of being applied to a hydraulic excavator representative of a working machine, more specifically an electric hydraulic excavator, as an example.

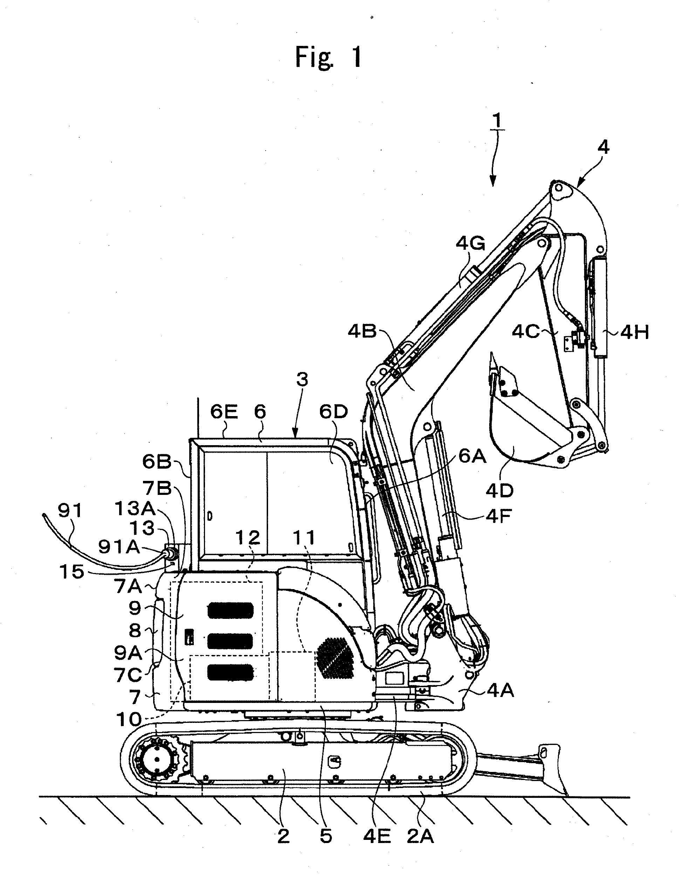

It should be noted that in the following explanation, the front side of an electric hydraulic excavator 1 in a front-rear direction is defined as a working mechanism 4-side and the rear side thereof is defined as a counterweight 7-side at the opposite side to the working mechanism 4. A left-right direction of the electric hydraulic excavator 1 is defined as a direction perpendicular to the front-rear direction. For example, in Fig. 1, a left-right direction of paper corresponds to the front-rear direction (X direction) of the electric hydraulic excavator 1, a front-back direction of paper corresponds to the left-right direction (Y direction) of the electric hydraulic excavator 1, and an upper-lower direction of paper corresponds to an upper-lower direction (Z direction) of the electric hydraulic excavator 1.

The electric hydraulic excavator 1 (hereinafter, referred to as a hydraulic excavator 1) as the working machine is used in working sites for civil engineering works, demolish works, underground works and the like, for example. The hydraulic excavator 1 according to the embodiment is configured as a hydraulic excavator (electric mini excavator or electric compact hydraulic excavator) of a compact type (for example, the machinery weight is approximately one to six tons) suitable for works in a narrow working site of underground works, for example, and the like. In addition, the hydraulic excavator 1 according to the embodiment is configured as the hydraulic excavator 1 of a cab specification.

The hydraulic excavator 1 is provided with an automotive lower traveling structure 2 of a crawler type, an upper revolving structure 3 mounted on the lower traveling structure 2 to be capable of revolving thereto and a working mechanism 4 disposed on the front side of the upper revolving structure 3 . A vehicle body of the electric hydraulic excavator 1 includes the lower traveling structure 2 and the upper revolving structure 3 . The vehicle body can travel and revolve. The swing type working mechanism 4 is disposed to be capable of swinging on the front side of the upper revolving structure 3 . The hydraulic excavator 1 uses the working mechanism 4 to perform an excavating work of earth and sand or the like.

The lower traveling structure 2 includes a crawler track 2A with a plurality of shoes attached to an endless-shaped track link and left and right traveling hydraulic motors (not shown) that revolve the crawler track 2A to cause the hydraulic excavator 1 to travel (travel on its own) . A revolving device including a revolving bearing and a revolving hydraulic motor is disposed between the lower traveling structure 2 and the upper revolving structure 3,

The working mechanism 4 also called a front device is provided with a swing post 4A disposed on the front side of a revolving frame 5 to be capable of swinging in the left-right direction. A boom 4B is attached on the swing post 4A to be rotatable thereto, and an arm 4C is attached on a tip end of the boom 4B to be rotatable thereto. A bucket 4D as a working tool is attached on a tip end of the arm 4C to be rotatable thereto. In addition, the working mechanism 4 is provided with a swing cylinder 4E for swinging the swing post 4A, a boom cylinder 4F for rotating the boom 4B, an arm cylinder 4G for rotating the arm 4C, and a bucket cylinder 4H as a working tool cylinder for rotating the bucket 4D.

The upper revolving structure 3 revolves on the lower traveling structure 2 by the driving of the revolving hydraulic motor in the revolving device. The upper revolving structure 3 is provided with a counterweight 7, an electric motor 10 as a prime mover and an emergency stop switch 21 also called an emergency stop button. Therefore, the upper revolving structure 3 is provided with the revolving frame 5 as a support structure (base frame) . The revolving frame 5 is provided thereon with a cab 6, the counterweight 7, an exterior cover 9, the electric motor 10, a hydraulic pump 11, a battery device 12, a control valve device (not shown) and the like. In this case, the working mechanism 4 is attached on the front side of the revolving frame 5. The counterweight 7 is attached on the rear side of the revolving frame 5.

The cab 6 is located on the left side of the revolving frame 5. The cab 6 is formed in a boxy shape in such a manner as to be surrounded by a front surface 6A, a rear surface 6B, a left side surface 6C, a right side surface 6D and an upper surface 6E. The inside of the cab 6 is formed as an operating room for an operator. An operator's seat for the operator to sit on, a traveling lever and pedal and a working lever for controlling the hydraulic excavator 1 are arranged in the cab 6. The operator operates the traveling lever and pedal and the working lever, thereby making it possible to perform the travel by the lower traveling structure 2, the revolving of the upper revolving structure 3, the excavation by the working mechanism 4 and the like.

The counterweight 7 is disposed on the rear end side of the upper revolving structure 3. The counterweight 7 is disposed in the rear end of the revolving frame 5 to be positioned closer to the rear side than the cab 6 for acting as a weight balance to the working mechanism 4. The counterweight 7 extends in the left-right direction and is formed as an arc-shaped heavy load of which a central part in the left-right direction projects backward. With this configuration, when the upper revolving structure 3 revolves, a rear surface 7A of the counterweight 7 is formed as an arc surface in such a manner as to be accommodated within a visual circle having a constant revolving radius.

The counterweight 7 rises upward from the rear end of the revolving frame 5 to cover the electric motor 10, the hydraulic pump 11, the battery device 12 and the like from the backward. An extension part 7B is formed on an upper end of the counterweight 7 to extend forward. The rear side of the cab 6 is supported by the extension part 7B. In addition, a power receiving box 13 is disposed on the left end side of the extension part 7B. A power feeding cable 91 is connected to the power receiving box 13.

An inspection cover 8 also called a slide cover is disposed to be openable/closable in the central part of the counterweight 7 to cover an opening 7C for inspection. When the inspection cover 8 is moved from a position as shown in Fig. 1 to Fig. 3 to the upper side, it is possible to open the opening 7C for inspection. Further, a recessed part 7D is formed, which is in a portion that deviates from the opening 7C for inspection, on the rear surface 7A of the counterweight 7. The recessed part 7D is formed on the counterweight 7 to be recessed toward the inner side from the rear surface 7A of the counterweight 7. The emergency stop switch 21 is disposed within the recessed part 7D. The emergency stop switch 21 is a switch for prime mover stop disposed apart from a key switch 23 (start-up stop switch) disposed near the operator's seat, that is, a switch for stopping the electric motor 10.

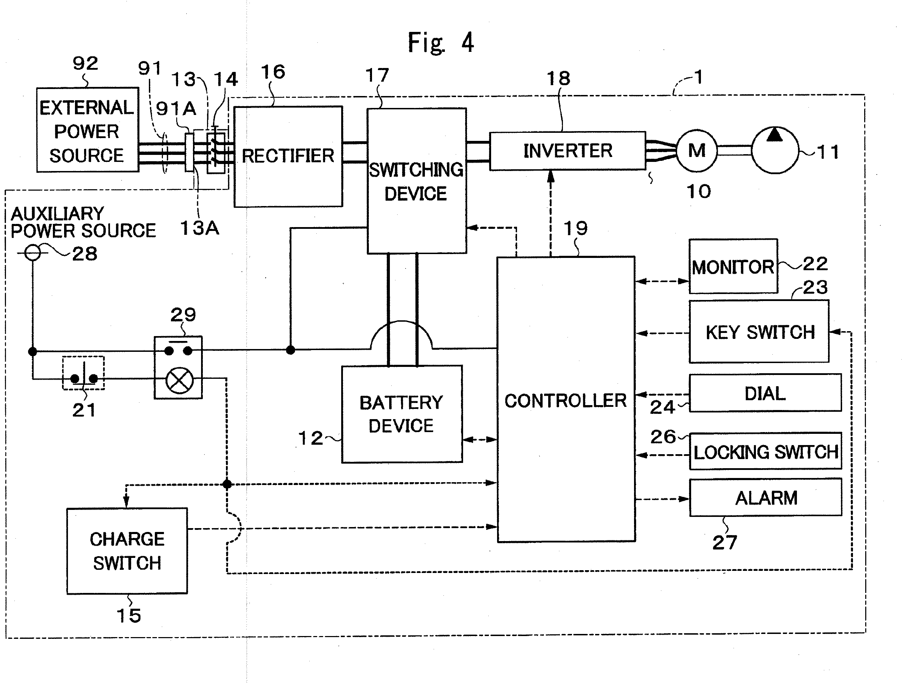

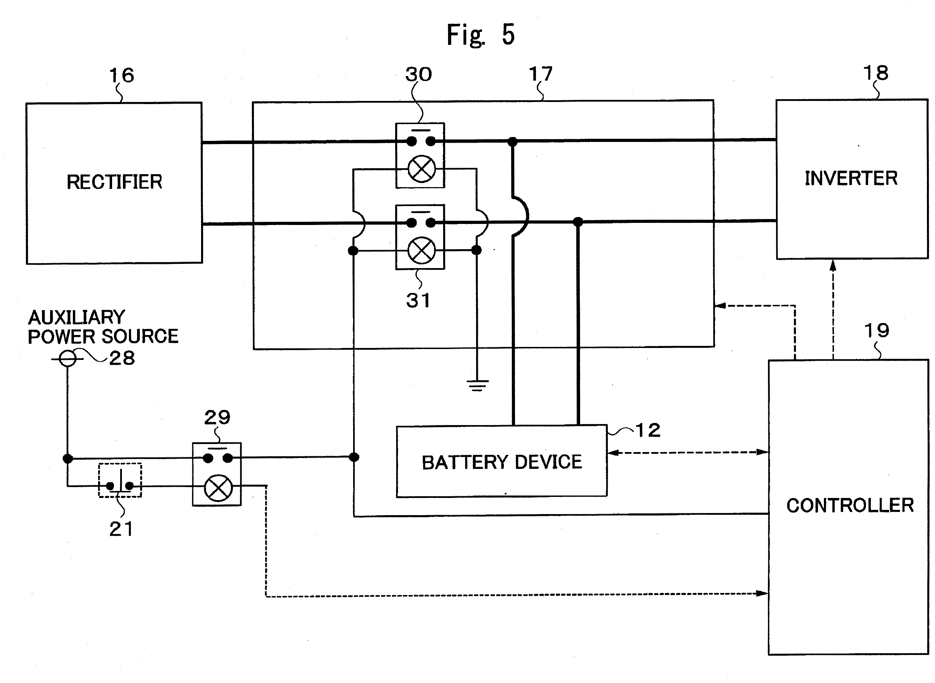

As shown in Fig. 4 and Fig. 5 which will be described later, when the emergency stop switch 21 is operated (for example, when the emergency stop switch 21 is pushed), a first relay 29 becomes in the shutdown state, which causes an auxiliary power source 28 and a controller 19 to be disconnected. Along with this, a second relay 30 and a third relay 31 in the switching device 17 become in the shutdown state, which causes a rectifier 16 and each of the battery device 12 and an inverter 18 to be disconnected. With this configuration, power supply to the controller 19 is stopped and an external power source 92 and each of the battery device 12 and the inverter 18 are blocked in terms of a circuit. As a result, the drive system (electric drive system) of the hydraulic excavator 1 is stopped. That is, the emergency stop switch 21 can immediately stop the drive of the hydraulic excavator 1. The emergency stop switch 21 configures part of an operation stop device of the hydraulic excavator 1 together with relays 29, 30, 31. The emergency stop switch 21 is operated when an emergency stop of the hydraulic excavator 1 (electric motor 10) is in need, for example.

The exterior cover 9 is disposed on the revolving frame 5 to be positioned in front of the counterweight 7. As shown in Fig. 1, the exterior cover 9 covers the electric motor 10, the hydraulic pump 11, the battery device 12 and the like together with the counterweight 7 and the inspection cover 8. The exterior cover 9 includes a right exterior cover 9A for covering the electric motor 10, the hydraulic pump 11, the battery device 12 and the like from the right side and the upper side, and a left exterior cover 9B for covering the electric motor 10, the hydraulic pump 11, the battery device 12 and the like from the left side. The right exterior cover 9A, the left exterior cover 9B and the inspection cover 8 for covering the opening 7C of the counterweight 7 can be released at the maintenance working. With this configuration, a worker that performs the maintenance can access the inner equipment devices (the electric motor 10, the hydraulic pump 11, the battery device 12 and the like).

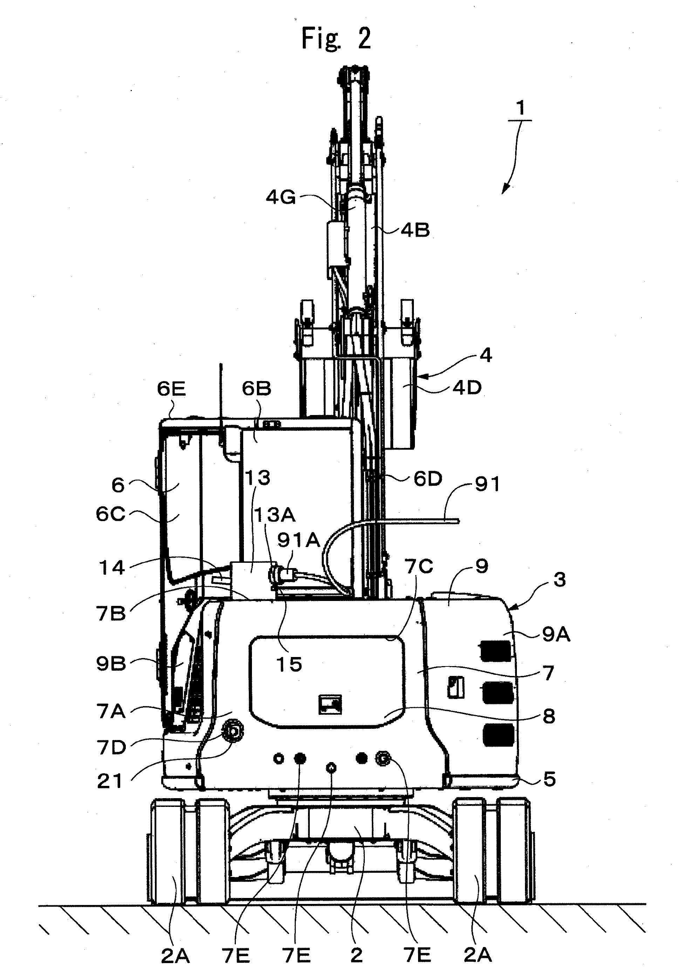

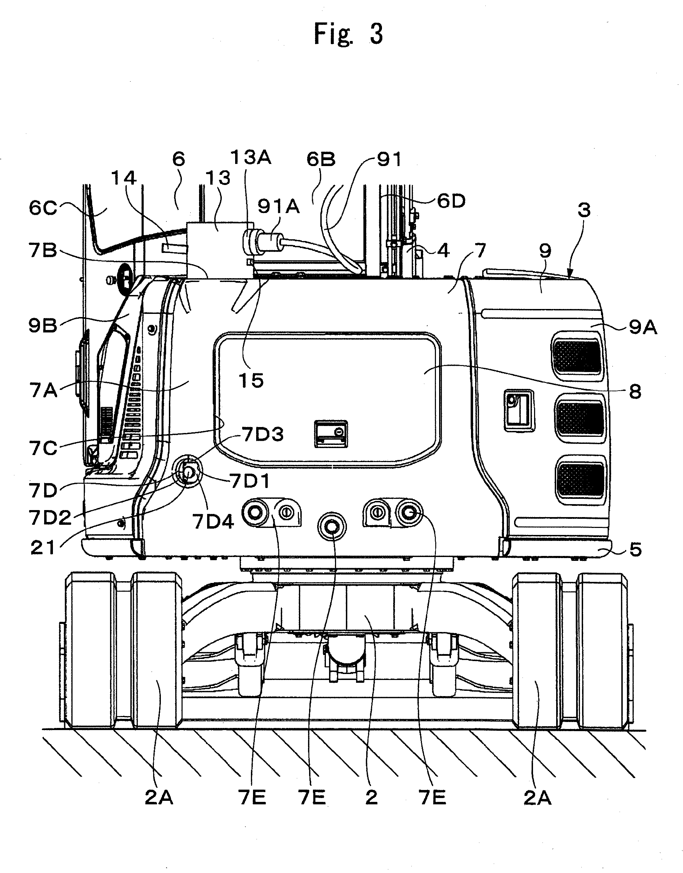

As shown in Fig. 2 and Fig. 3, the power receiving box 13 is disposed on the left end side of the extension part 7B in the counterweight 7. The power receiving box 13 is provided with a power feeding port 13A (for example, an inlet as a female-side connector) for connection of the power feeding cable 91. A power feeding connector 91A (for example, an inlet plug as a male-side connector) of the power feeding cable 91 extending from the external power source 92 (Fig. 4) is connected to the power feeding port 13A. In this way, the upper revolving structure 3 is provided with the power feeding port 13A for connection of the power feeding cable 91.

The power feeding cable 91 supplies electric power to the electric motor 10 serving as the power source of the hydraulic excavator 1. That is, the electric power of the external power source 92 is supplied via the power feeding cable 91, the power feeding connector 91A and the power receiving box 13 to the hydraulic excavator 1. It should be noted that the illustration is omitted, but a cable support device provided with a bar-shaped arm may be disposed in the extension part 7B of the counterweight 7, wherein an intermediate part of the power feeding cable 91 may be supported on a tip end side of the arm projecting outward from the counterweight 7.

In addition, as shown in Fig. 3 and Fig. 4, the power receiving box 13 is provided with a breaker 14 and a charge switch 15. As shown in Fig. 4, the breaker 14 is disposed between the power feeding connector 91A of the power feeding cable 91 (in other words, the power feeding port 13A of the power receiving box 13) and the rectifier 16. The breaker 14 is a switch for blocking the connection between the external power source 92 and the rectifier 16. When the breaker 14 is operated, the connection between the external power source 92 and an electrical circuit within the vehicle can be physically blocked out.

The charge switch 15 is a charge switching part for switching supply and stop of the electric power to the battery device 12. The charge switch 15 is operated at the time the battery device 12 is recharged with the electric power from the external power source 92. That is, the start of the charge or the stop of the charge to the battery device 12 can be carried out by performing the operation (ON-operation/OFF-operation) of the charge switch 15. As shown in Fig. 3, the charge switch 15 is located in the vicinity of the power feeding port 13A of the power receiving box 13. Therefore, a worker can immediately perform the operation (ON-operation/OFF-operation) of the charge switch 15 following attachment/removal of the power feeding cable 91 to/from the power receiving box 13.

That is, when the worker performs the on operation of the charge switch 15 after the power feeding cable 91 is connected to the power feeding port 13A of the power receiving box 13, it is possible to immediately start the charging of the battery device 12. In addition, when the worker performs the OFF-operation of the charge switch 15 after stopping the charging, the power feeding cable 91 can be immediately disconnected. It should be noted that in Fig. 4 the charge switch 15 is shown in a position out of the power receiving box 13 for avoiding complication of the drawings.

The exterior cover 9 is provided therein with the rectifier 16, the switching device 17, the inverter 18 and the controller 19, which are shown in Fig. 4, as described later besides the electric motor 10, the hydraulic pump 11 and the battery device 12. The rectifier 16 converts AC power supplied from the external power source 92 into DC power. The switching device 17 switches a supplying state of electric power between the rectifier 16, the battery device 12 and the inverter 18. The inverter 18 converts DC power supplied from the switching device 17 into AC power, which is supplied to the electric motor 10. As shown in Fig. 4, the power feeding port 13A, the rectifier 16, the switching device 17, the battery device 12, the inverter 18 and the electric motor 10 are respectively connected to be capable of being energized by in-vehicle cables.

The electric motor 10 is a prime mover serving as a power source of the hydraulic excavator 1. The electric motor 10 is connected mechanically to the hydraulic pump 11, that is, to be capable of transmitting the power (rotation) . The hydraulic pump 11 supplies hydraulic oil via the control valve device to various kinds of hydraulic actuators (hydraulic cylinders and hydraulic motors) of the boom cylinder 4F and the like. The control valve device is a group of control valves composed of a plurality of directional control valves. The control valve device distributes the hydraulic oil discharged from the hydraulic pump 11 to the plurality of hydraulic actuators (hydraulic cylinders and hydraulic motors) of the boom cylinder 4F and the like in response to operations of the traveling lever and pedal and the working lever. With this configuration, the hydraulic excavator 1 can perform traveling, revolving and excavating movements, and the like.

The hydraulic excavator 1 can operate in a state where the power feeding connector 91A of the power feeding cable 91 is being removed from the power feeding port 13A of the power receiving box 13 when the battery device 12 is sufficiently charged, for example. In this case, the electric motor 10 is driven by the electric power from the battery device 12. In addition, the hydraulic excavator 1 can also operate in a state where the power feeding connector 91A of the power feeding cable 91 is connected to the power feeding port 13A of the power receiving box 13. In this case, the electric motor 10 is driven by the electric power fed from the external power source 92 and the electric power fed from the battery device 12 for making up a deficiency. At this time, the hydraulic excavator 1 can perform traveling, revolving and excavating movements, and the like in a state where the power feeding cable 91 is being connected to the power feeding port 13A.

Next, an explanation will be made of the electric drive system of the hydraulic excavator 1 by referring to Fig. 4 and Fig. 5.

As shown in Fig. 4, the electric power is supplied via the power feeding cable 91 from the external power source 92 of a commercial power source located in a position away from the hydraulic excavator 1, and the like to the electric drive system in the hydraulic excavator 1. The electric drive system in the hydraulic excavator 1 has a function (charging function) for supplying electric power to the battery device 12 from the external power source 92 and a function (driving function) for supplying electric power to the electric motor 10 from the external power source 92 and/or the battery device 12. The power supply (charging) to the battery device 12 and the power supply to the inverter 18 are performed by connecting the second relay 30 and the third relay 31 (Fig. 5) each arranged in the inner circuit in the switching device 17, based upon commands from the controller 19.

The external power source 92 is three-phase AC power, for example. The rectifier 16 converts three-phase AC power into DC power. When the power feeding connector 91A of the power feeding cable 91 is connected to the power feeding port 13A of the power receiving box 13, the electric power fed from the external power source 92 can be supplied via the power feeding cable 91 and the power feeding port 13A to the hydraulic excavator 1. In this case, the electric power fed from the external power source 92 can be supplied (charged) via the power feeding cable 91, the power feeding port 13A, the rectifier 16 and the switching device 17 to the battery device 12. In addition, the electric power fed from the external power source 92 can be supplied via the power feeding cable 91, the power feeding port 13A, the rectifier 16, the switching device 17 and the inverter 18 to the electric motor 10. In addition, the electric power of the battery device 12 can be supplied via the switching device 17 and the inverter 18 to the electric motor 10.

An input side of the controller 19 is connected to a monitoring device 22, a key switch 23, a rotating speed dial 24, a locking switch 26, the charge switch 15 and the battery device 12. An output side of the controller 19 is connected to the monitoring device 22, an alarm 27, the charge switch 15, the battery device 12, the switching device 17 and the inverter 18. The controller 19 is a vehicle body control controller that controls the movement of the hydraulic excavator 1. The controller 19 controls the switching device 17 and the inverter 18 based on signals (input signals) from the key switch 23, the rotating speed dial 24, the locking switch 26, the monitoring device 22, the charge switch 15 and the battery device 12.

With this configuration, the controller 19 controls a drive of the electric motor 10 serving as the drive source of the hydraulic excavator 1. In addition, the controller 19 executes control (information display control) of the monitoring device 22 and control of an alarm (alarm output control). Because of these, the controller 19 includes a microcomputer. The controller 19 includes a memory composed of a flash memory, a ROM, a RAM, an EEPROM and the like and a calculation circuit (CPU) . A program of the control in the electric motor 10, a program of the control in the monitoring device 22 and the like are stored in the memory. In addition, electric power is supplied to the controller 19 from an auxiliary power source 28. The auxiliary power source 28 is a power source that supplies electric power to various kinds of equipment devices configuring the electric drive system in the hydraulic excavator 1. The auxiliary power source 28 is configured of a lead battery of 12V and a lead battery of 24V mounted in the hydraulic excavator 1, for example.

The battery device 12 is an electric storage device that is recharged with electric power for driving the electric motor 10. The battery device 12 is configured of a lithium-ion secondary battery, for example. A battery monitoring device is disposed in the battery device 12. The controller 19 is connected to the battery monitoring device. The battery monitoring device monitors a state of the battery device 12 (battery state), for example, an SOC (charging state), temperatures, abnormality and the like. The battery monitoring device outputs signals corresponding to the battery state to the controller 19.

The monitoring device 22 is an in-vehicle monitor (monitor) . The monitoring device 22 is disposed in the cab 6 of the hydraulic excavator 1, for example. The monitoring device 22 displays information that should be conveyed to an operator for steering the hydraulic excavator 1. For example, the monitoring device 22 displays the operating state of the hydraulic excavator 1, the SOC corresponding to a battery remaining quantity of the battery device 12, malfunction information on various equipment devices, warning information, the present time and the like. The monitoring device 22 is an information notifying device for notifying information to an operator by using a screen.

The key switch 23 is disposed in the cab 6 of the hydraulic excavator 1, for example. The key switch 23 is a start-up stop switch for executing start-up (power source ON) and stop (power source OFF) of the hydraulic excavator 1. Signals (ON signal and OFF signal) of the key switch 23 are outputted to the controller 19. An operator, for example, inserts a key into the key switch 23 and rotates the key, thus making it possible to execute operations of the start-up and the stop of the hydraulic excavator 1.

The charge switch 15 is disposed in the power receiving box 13 in the hydraulic excavator 1, for example. The charge switch 15 is, when the power feeding cable 91 is connected to the power feeding port 13A, a switch for selecting whether or not the electric power of the external power source 92 is supplied to the battery device 12. That is, the charge switch 15 is a switch for selecting whether or not the charging of the battery device 12 is executed. Signals (charge ON-signal and charge OFF-signal) of the charge switch 15 are inputted to the controller 19. When the power feeding cable 91 is connected to the power feeding port 13A, an operator switches on the charge switch 15, thereby making it possible to execute the charging of the battery device 12.

It should be noted that the charge switch 15 may be disposed within the cab 6, for example. On the other hand, in a case where the charge switch 15 is disposed in the power receiving box 13, after the connection work or the removal work of the power feeding cable 91 is executed, the charge switch 15 can be immediately operated in a position where the above work is executed. Therefore, in terms of the above point, it is preferable to dispose the charge switch 15 in the power receiving box 13. In addition, the charge switch 15 may be disposed in the cab 6 and in the power receiving box 13 each.

The locking switch 26 is a detection switch for detecting a position of a gate lock lever (not shown) . That is, the locking switch 26 detects whether a position of the gate lock lever is a locking position (upper position) for prohibiting a drive of the hydraulic actuator in the hydraulic excavator 1 or a lock releasing position (lower position) for allowing the drive of the hydraulic actuator.

Signals of the locking switch 26 (locking signal and lock releasing signal) are outputted to the controller 19. The gate lock lever is operated to an entrance regulating position (lock releasing position) for shutting (closing) a platform of the cab 6 or an entrance allowing position (locking position) for releasing (opening) the platform. The hydraulic excavator 1 can drive the hydraulic actuator when the gate lock lever is being operated to the lock releasing position.

The alarm 27 outputs a warning sound and a warning voice to an operator, based upon a determination of the controller 19. The alarm 27 is an information notifying device for notifying the information to an operator by the sound.

The rotating speed dial 24 is a dial for variably setting the rotating speed of the electric motor 10. The rotating speed dial 24 is operated by an operator. The rotating speed dial 24 outputs a command (signal) of a motor rotating speed in response to an operation of an operator to the controller 19. The controller 19 controls the inverter 18 by a command of the rotating speed dial. That is, the inverter 18 controls a frequency of the supply voltage to the electric motor 10 by a motor rotating speed command from the controller 19 to control the rotating speed of the electric motor 10.

The hydraulic pump 11 is connected to the electric motor 10. The hydraulic excavator 1 is driven by supply of operating oil discharged from the hydraulic pump 11 via the control valve device to various hydraulic actuators. A quantity of the operating oil discharged from the hydraulic pump 11 corresponds to a rotating speed of the hydraulic pump 11. Therefore, as the higher a rotating speed of the electric motor 10 is, the higher a speed of the hydraulic actuator gets and as the lower the rotating speed of the electric motor 10 is, the lower the speed of the hydraulic actuator gets. In addition, it is possible to stop the hydraulic excavator 1 by stopping the rotation of the electric motor 10.

The emergency stop switch 21 is a switch for stopping the electric motor 10. The emergency stop switch 21 is disposed apart from the key switch 23. The emergency stop switch 21 can immediately stop the drive of the hydraulic excavator 1. Therefore, as shown in Fig. 4, the emergency stop switch 21 is disposed between the auxiliary power source 28 and the first relay 29. That is, an excitation circuit of the first relay 29 is connected via the emergency stop switch 21 to the auxiliary power source 28. The emergency stop switch 21 is a normal closed switch which is usually closed (in the connecting state). When the emergency stop switch 21 is operated (for example, the emergency stop switch 21 is pushed) by a worker or the like, the emergency stop switch 21 is opened (connection is cut off) . The first relay 29 connects/blocks out an electrical circuit of the auxiliary power source 28.

More specifically, as shown in Fig. 5, the first relay 29 connects/blocks out circuits between "each of the second relay 30 and the third relay 31 arranged in the switching device 17" and "the controller 19", and "the auxiliary power source 28". When a contact point of the first relay 29 is driven, that is, when the first relay 29 is connected, the electric power is supplied to the second relay 30, the third relay 31 and the controller 19 from the auxiliary power source 28. The charge switch 15 and the key switch 23 are connected to the downstream side of the excitation circuit in the first relay 29. When the charge switch 15 and/or the key switch 23 is operated, excitation current flows in the first relay 29 in such a manner as to locate the auxiliary power source 28 in the upstream side to drive the contact point of the first relay 29 (the first relay 29 becomes in the connecting state) .

When the controller 19 and the auxiliary power source 28 are connected, the connection of the excitation circuit in the first relay 29 is maintained by the output of the controller 19 to supply the electric power of the auxiliary power source 28 to the various equipment devices including the switching device 17. On the other hand, the excitation circuit of each of the second relay 30 and the third relay 31 arranged in the switching device 17 has the downstream side connected to the earth. The second relay 30 and the third relay 31 connect/block out the electrical circuit between the rectifier 16 and each of the battery device 12 and the inverter 18. The contact point of each of the second relay 30 and the third relay 31 is driven (connected) due to the current flowing in the excitation circuit by the electric power of the auxiliary power source 28 supplied through the first relay 29. When the second relay 30 and the third relay 31 are connected, the rectifier 16 and each of the battery device 12 and the inverter 18 are connected. With this configuration, the external power source 92 and each of the battery device 12 and the inverter 18 are connected.

Here, in a case where the emergency stop switch 21 is operated, the excitation circuit in the first relay 29 is blocked out. Because of this configuration, the supply of the electric power to the controller 19 and the second relay 30 and the third relay 31 in the switching device 17 is blocked out. In addition, since the battery device 12 is controlled by the controller 19, when the controller 19 is stopped, a contact point of a relay (not shown) within the battery device 12 is released to block out the connection with the switching device 17. When the emergency stop switch 21 is operated in this way, it is possible to immediately stop the power circuit connected to the switching device 17 and the equipment devices including the controller 19. The emergency stop switch 21 and the relays 29, 30, 31 configure the operation stop device for executing the limit and stop of the operation of the electric motor 10 serving as the prime mover of the hydraulic excavator 1.

Incidentally, in the engine emergency stop device in the construction machine described in Patent Document 1 as described above, the stop switch, the link mechanism, the stop lever and the like project downward from the lower surface of the upper revolving structure. In a case of this configuration, there is a possibility that the stop switch is damaged by scraps involved in the crawl track of the hydraulic excavator, the flying objects or the like. In addition, there is a possibility that the stop switch malfunctions due to the contact between the exterior part of the hydraulic excavator and obstacles around the hydraulic excavator.

On the other hand, according to the embodiment the emergency stop switch 21 is disposed in the recessed part 7D of the counterweight 7. That is, the emergency stop switch 21 is disposed in the inside of the recessed part 7D of the counterweight 7. Because of this, the counterweight 7 is provided with the recessed part 7D recessed from the rear surface 7A as the surface of the counterweight 7. The recessed part 7D is formed in the counterweight 7, for example, an opening thereof being formed as a circular bottomed hole. That is, the recessed part 7D has a circular opening 7D1 formed on the rear surface 7A, an inner wall surface 7D2 extending in the depth direction of the recessed part 7D over an entire periphery from the opening 7D1, and a bottom surface 7D3 for closing the inner wall surface 7D2 at the deep side in the depth direction of the recessed part 7D. The inner side of the recessed part 7D is formed as a column-shaped space defined by the bottom surface 7D3 and the inner wall surface 7D2, that is, an accommodation space 7D4 in which the emergency stop switch 21 is accommodable. With this configuration, the counterweight 7 has the accommodation space 7D4 the periphery of which is covered by the recessed part 7D and in which the emergency stop switch 21 is accommodable. In addition, the backward (opening 7D1-side) of the accommodation space 7D4 is open to the outside. That is, the opening 7D1 of the recessed part 7D is not closed and the accommodation space 7D4 is exposed. A through hole (not shown) for insert of a cable extending from the emergency stop switch 21 is formed in the bottom surface 7D3 of the bottomed hole as the recessed part 7D. In addition, the emergency stop switch 21 is disposed in the recessed part 7D of the counterweight 7. In this case, the emergency stop switch 21 is fixed to the recessed part 7D not to project from the rear surface 7A (surface) of the counterweight 7. In other words, the emergency stop switch 21 is fixed within the recessed part 7D to be positioned closer to the inner side than the rear surface 7A (surface). That is, the emergency stop switch 21 does not project outside from the opening 7D1 of the recessed part 7D.

As described before, the counterweight 7 is provided with the opening 7C for maintenance. That is, the counterweight 7 is provided with the opening 7C penetrating between a front surface facing the electric motor 10 and the rear surface 7A at the opposite to the front surface. The opening 7C is covered with the openable/closable inspection cover 8. In addition, the recessed part 7D is disposed adjacent to the opening 7C. With this configuration, the emergency stop switch 21 is disposed adjacent to the opening 7C. The inspection cover 8 as a cover is attached to the counterweight 7 to be movable to the closed position for covering the opening 7C and the open position for opening the opening 7C. The recessed part 7D is disposed in a position of being not covered with the inspection cover 8 regardless of the inspection cover 8 being in the closed position or in the open position. As a result, the emergency stop switch 21 is disposed in the position of being not covered with the inspection cover 8 regardless of the inspection cover being in the closed position or in the open position. In this case, for example, the recessed part 7D is disposed in a height position lower than the upper end of the opening 7C. With this configuration, the emergency stop switch 21 is disposed in the height position lower than the upper end of the opening 7C. More specifically, the recessed part 7D is disposed in the same height position as that of the lower end of the opening 7C or in the height position lower than the lower end of the opening 7C. With this configuration, the emergency stop switch 21 is disposed in the same height position as that of the lower end of the opening 7C or in the height position lower than the lower end of the opening 7C.

In addition, the counterweight 7 is provided with an attaching part 7E for attaching an additional counterweight (not shown) . The recessed part 7D is disposed closer to the upper side than the attaching part 7E of the additional counterweight. Because of this configuration, the emergency stop switch 21 is disposed closer to the upper side than the attaching part 7E of the additional counterweight. The recessed part 7D is not closed by the additional counterweight even in a state where the additional counterweight is attached to the counterweight 7. As a result, the emergency stop switch 21 is not closed by the additional counterweight even in a state where the additional counterweight is attached to the counterweight 7.

In addition, as shown in Fig. 3, the recessed part 7D (emergency stop switch 21) is disposed in the same side as the power receiving box 13 (charge switch 15 and power feeding port 13A) with respect to the left-right direction of the hydraulic excavator 1. That is, the recessed part 7D (emergency stop switch 21) and the charge switch 15 are arranged in the left side of the hydraulic excavator 1 as one side in the left-right direction. In other words, the recessed part 7D (emergency stop switch 21) and the charge switch 15 are arranged to be present partially on one side (left side) of the hydraulic excavator 1 in the left-right direction. In addition, the recessed part 7D (emergency stop switch 21) and the charge switch 15 are arranged on the left side of the hydraulic excavator 1 as one side in the left-right direction. In other words, the recessed part 7D (emergency stop switch 21) and the power feeding port 13A are arranged to be present partially on one side (left side) of the hydraulic excavator 1 in the left-right direction.

In this way, in the embodiment the emergency stop switch 21 is disposed in the recessed part 7D of the counterweight 7. In addition thereto, an operational part of the emergency stop switch 21 does not project from the surface of the counterweight 7. Therefore, for example, at the time of revolving the upper revolving structure 3, it is possible to suppress damages and malfunctions of the emergency stop switch 21. In addition, the emergency stop switch 21 is located within the counterweight 7 positioned above the lower traveling structure 2. Therefore, it is possible to reduce the possibility that the emergency stop switch 21 comes in contact with obstacles on the ground at the traveling and the possibility that the emergency stop switch 21 comes in contact with flying objects curled up from the ground. Because of this, it is possible to suppress damages and malfunctions of the emergency stop switch 21 from this point of view as well.

In addition, even when the hydraulic excavator 1 rolls over, it is possible to suppress damages and malfunctions of the emergency stop switch 21 from a viewpoint that the emergency stop switch 21 is disposed in the recessed part 7D and the counterweight 7 is high in rigidity and difficult to be deformed. In this way, in the embodiment the emergency stop switch 21 is protected by a robust structure of the counterweight 7 against the revolving movement of the hydraulic excavator 1, the traveling movement of the crawl track of the lower traveling structure 2 and the overturn of the hydraulic excavator 1. With this configuration, it is possible to suppress damages and malfunctions of the emergency stop switch 21 to improve security and reliability.

The hydraulic excavator 1 according to the embodiment has the configuration as described above, and next, an explanation will be made of the movement of the hydraulic excavator 1.

For example, in a case where the external power source 92 is in the working site, the power feeding cable 91 extending from the external power source 92 is connected to the power feeding port 13A of the hydraulic excavator 1. With this configuration, the electric power from the external power source 92 is supplied via the rectifier 16, the switching device 17 and the inverter 18 to the electric motor 10. The electric power from the external power source 92 can also be charged to the battery device 12. The electric motor 10 drives the hydraulic pump 11 by the electric power from the external power source 92 and/or the battery device 12.

When an operator operates the traveling lever and pedal, the hydraulic oil is supplied from the hydraulic pump 11 via the control valve device to the traveling hydraulic motor of the lower traveling structure 2. This configuration enables the hydraulic excavator 1 to travel. When the operator operates the working lever, the hydraulic oil is supplied from the hydraulic pump 11 via the control valve device to a revolving hydraulic motor, the swing cylinder 4E, the boom cylinder 4F, the arm cylinder 4G and the bucket cylinder 4H. This configuration enables the working mechanism 4 to perform the excavating work of earth and sand and the like while revolving the upper revolving structure 3.

Here, according to the embodiment the counterweight 7 is provided with the recessed part 7D recessed from the surface (rear surface 7A) of the counterweight 7. In addition, the emergency stop switch 21 is disposed within the recessed part 7D of the counterweight 7. Therefore, the emergency stop switch 21 can be protected by the strong counterweight 7. That is, even if scraps involved in the crawler track 2A in the hydraulic excavator 1, flying objects or the like comes toward the emergency stop switch 21, when it collides with the surface (rear surface 7A) of the counterweight 7, it is possible to be difficult to collide with the emergency stop switch 21 within the recessed part 7D. In addition, obstacles around the hydraulic excavator 1 also collide with the surface (rear surface 7A) of the counterweight 7, thereby making it possible to be difficult to collide with the emergency stop switch 21 within the recessed part 7D. With this configuration, it is possible to suppress the malfunctions and the damages of the emergency stop switch 21.

According to the embodiment, the counterweight 7 is provided with the opening 7C. The opening 7C penetrates between the front surface facing the electric motor 10 as the prime mover and the rear surface 7A at the opposite to the front surface. The opening 7C is covered with the inspection cover 8 as the openable/closable cover. In addition, the recessed part 7D (emergency stop switch 21) is disposed adjacent to the opening 7C of the counterweight 7. Therefore, the position of the emergency stop switch 21 can be set near a worker that opens the opening 7C of the counterweight 7 and executes the work in the vicinity of the opening 7C, for example. With this configuration, the worker can quickly operate the emergency stop switch 21.

According to the embodiment, the inspection cover 8 is attached to the counterweight 7 to be movable to the closed position for covering the opening 7C and the open position for opening the opening 7C. The recessed part 7D (emergency stop switch 21) is disposed in a position of being not covered with the inspection cover 8 regardless of the inspection cover 8 being in the closed position or in the open position. As a result, the recessed part 7D (emergency stop switch 21) is always exposed without being covered with the inspection cover 8, with no relationship to the position of the inspection cover 8. Therefore, for example, a worker that opens the inspection cover 8 and executes the work in the vicinity of the opening 7C of the counterweight 7 can quickly operate the emergency stop switch 21 without changing the position of the inspection cover 8 from the open position. It should be noted that in the embodiment a case where the inspection cover 8 is configured as a slide cover movable up and down is explained as an example, but a cover may be attached to a counterweight to be movable left and right.

According to the embodiment, the recessed part 7D (emergency stop switch 21) is disposed to be lower than the upper end of the opening 7C. Therefore, the position of the recessed part 7D (emergency stop switch 21) can be suppressed from being excessively high. As a result, the worker can quickly operate the emergency stop switch 21 from this point of view as well.

According to the embodiment, the counterweight 7 is provided with the attaching part 7E for attaching the additional counterweight. In addition, the recessed part 7D (emergency stop switch 21) is disposed closer to the upper side than the attaching part 7E. Therefore, even in a case where the additional counterweight is attached to the counterweight 7, the recessed part 7D (emergency stop switch 21) is exposed without being covered with the additional counterweight. Therefore, even in a state where the additional counterweight is attached to the counterweight 7, the emergency stop switch 21 can quickly be operated.

According to the embodiment, the prime mover of the hydraulic excavator 1 is the electric motor 10 that is driven by the supply of the electric power. In addition, the upper revolving structure 3 configuring part of the vehicle body is provided with the battery device 12 that stores electric power for driving the electric motor 10, and the charge switch 15 as the charge switching portion for switching the supply and stop of the electric power to the battery device 12. Besides, as shown in Fig. 3, the recessed part 7D (emergency stop switch 21) and the charge switch 15 are arranged in the left side as one side of the upper revolving structure 3 in the left-right direction. Therefore, the position of the emergency stop switch 21 can be set near the worker, who performs the connection of the power feeding cable 91 and operations for the start and stop of the charging, in the vicinity of the charge switch 15. As a result, the worker can quickly operate the emergency stop switch 21.

In addition, the upper revolving structure 3 is provided with the power feeding port 13A to which the power feeding cable 91 for supplying the electric power from the external power source 92 to the battery device 12 is connected. Besides, as shown in Fig. 3, the recessed part 7D (emergency stop switch 21) and power feeding port 13A are arranged in the left side as one side of the upper revolving structure 3 in the left-right direction. Therefore, the position of the emergency stop switch 21 can be set near the worker that performs the attachment/removal of the power feeding cable 91 to/from the power feeding port 13A. As a result, the worker can quickly operate the emergency stop switch 21.

It should be noted that in the embodiment a case where the first relay 29 is blocked out by the emergency stop switch 21, thereby stopping the drive of the electric motor 10 is explained as an example. However, not limited thereto, for example, a controller may detect an operation of an emergency stop switch and the controller may block out the relay, stopping the drive of the prime mover. That is, when the operation of the emergency stop switch is input to the controller, the controller outputs a stop command to an inverter for controlling the electric motor to stop the drive of the electric motor and block out the inner circuit of the switching device, thereby performing the drive stop of the hydraulic excavator and the block of the circuit connection.

In the embodiment, the hydraulic excavator 1 provided with the swing type working mechanism 4 is explained as an example. However, not limited thereto, the present invention may be applied to a hydraulic excavator provided with the other type working mechanism (front device), for example, a hydraulic excavator provided with a mono-boom type working mechanism, a hydraulic excavator provided with an offset type working mechanism, or the like. In addition, a case where the bucket 4D is used as the working tool of the working mechanism 4 is explained as an example, but for example, a working mechanism provided with the other working tool of a crushing machine or the like may be used.

In the embodiment, the hydraulic excavator 1 in which the battery device 12 is mounted on the upper revolving structure 3 is explained as an example of the working machine (electric working machine). That is, in the embodiment the electric hydraulic excavator 1 in which the electric motor 10 is driven by the electric power fed from the external power source 92 and is also driven by the electric power charged in the battery device 12 is explained as an example. However, not limited thereto, there may be used an electric working machine in which, for example, a battery device is not mounted and an electric motor is driven only by the electric power fed from an external power source.

In the embodiment, a case where the electric motor 10 is used as the prime mover that is the power source of the hydraulic excavator 1 (in other words, a drive source of the hydraulic pump 11) is explained as an example. That is, in the embodiment the electric working machine is explained as an example . However, not limited thereto, an engine (for example, a diesel engine) as an internal combustion engine may be used as the prime mover. In addition, the prime mover may be configured of both an engine and an electric motor. That is, the working machine may be provided with at least one of an engine and an electric motor. For example, in a case of the working machine provided with an engine, an emergency stop switch may be configured as a switch for stopping the engine. In a case of the working machine provided with both an engine and an electric motor, an emergency stop switch may be configured as a switch for stopping both the engine and the electric motor.

In the embodiment, the hydraulic excavator 1 of the cab specification provided with the cab 6 is explained as an example. However, not limited thereto, a hydraulic excavator of a canopy specification may be used, for example.

In the embodiment, the compact hydraulic excavator 1 is explained as an example, but the present invention may be applied to a midsize hydraulic excavator or a hydraulic excavator larger than the midsize one, for example. In addition, a case where the vehicle body includes the lower traveling structure 2 and the upper revolving structure 3 is explained as an example, but there may be used a vehicle body not having a revolving body (for example, an articulate type vehicle body in which a front vehicle body having front wheels and a rear vehicle body having rear wheels are connected via a connecting shaft to be capable of bending).

In the embodiment, the hydraulic excavator 1 is explained as an example of the working machine, but not limited thereto, the present invention may be applied widely to various working machines of wheel loaders, fork lifts, tractors, combines and the like, for example.

### DESCRIPTION OF REFERENCE NUMERALS

1: ELECTRIC HYDRAULIC EXCAVATOR (WORKING MACHINE)
2: LOWER TRAVELING STRUCTURE (VEHICLE BODY)
3: UPPER REVOLVING STRUCTURE (VEHICLE BODY)
4: WORKING MECHANISM
7: COUNTERWEIGHT
7A: REAR SURFACE (SURFACE)
7C: OPENING
7D: RECESSED PART
7E: ATTACHING PART
8: INSPECTION COVER (COVER)
10: ELECTRIC MOTOR (PRIME MOVER)
12: BATTERY DEVICE
13A: POWER FEEDING PORT
15: CHARGE SWITCH (CHARGE SWITCHING PORTION)
21: EMERGENCY STOP SWITCH

## Claims

1. A working machine comprising:
an automotive vehicle body; and
a working mechanism attached to the front side of the vehicle body,
the vehicle body including:
a counterweight disposed on a rear end side of the vehicle body;
a prime mover serving as a power source; and
an emergency stop switch for stopping the prime mover, **characterized in that**:
the counterweight is provided with a recessed part that is recessed from a surface of the counterweight; and
the emergency stop switch is disposed within the recessed part of the counterweight.

2. The working machine according to claim 1, wherein
the counterweight is provided with an opening penetrating between a front surface facing the prime mover and a rear surface at the opposite to the front surface, the opening being covered with an openable/closable cover, and
the emergency stop switch is disposed adjacent to the opening.

3. The working machine according to claim 2, wherein
the cover is attached to the vehicle body to be movable to the closed position for covering the opening and the open position for opening the opening, and
the emergency stop switch is disposed in a position of being not covered with the cover regardless of the cover being in the closed position or in the open position.

4. The working machine according to claim 2, wherein
the emergency stop switch is disposed to be lower than an upper end of the opening.

5. The working machine according to claim 1, wherein
the counterweight is provided with an attaching part for attaching an additional counterweight, and
the emergency stop switch is disposed closer to the upper side than the attaching part.

6. The working machine according to claim 1, wherein
the prime mover includes an electric motor that is driven by the supply of electric power,
the vehicle body further includes:
a battery device that stores the electric power for driving the electric motor; and
a charge switching portion for switching the supply and stop of the electric power to the battery device, and
the emergency stop switch and the charge switching portion are arranged in one side of the vehicle body in the left-right direction.

7. The working machine according to claim 1, wherein
the prime mover includes an electric motor that is driven by the supply of electric power,
the vehicle body further includes:
a battery device that stores the electric power for driving the electric motor; and
a power feeding port to which a power feeding cable for supplying electric power fed from an external power source to the battery device is connected, and
the emergency stop switch and the power feeding port are arranged in one side of the vehicle body in the left-right direction.
